# EUROPEAN PATENT APPLICATION

(11) **EP 0 781 023 A2**
(43) Date of publication of application: **25.06.1997**
(21) Application number: 96110793.5
(22) Date of filing: 04.07.1996
(51) Int. Cl.: H04M 3/42

(54) **Bidirectional data exchange (protocol) between a telecommunications exchange and a terminal**

(30) Priority: 22.12.1995 DE 19548296
(71) Applicant: Deutsche Telekom AG, 53113 Bonn (DE)
(72) Inventor: Dihlmann, Klaus, Dipl.-Ing., 64839 Münster-Altheim (DE); Flügel, Ottmar, Dipl.-Ing., 36039 Fulda (DE)

(57) **Zusammenfassung**

Die Erfindung betrifft ein Verfahren zum bidirektionalen Austauschen von Anwendungs-, Steuer- und Informationsdaten zwischen wenigstens einer zentralen Einrichtung und wenigstens einer bei einem Teilnehmer installierten analogen Endeinrichtung, die über eine analoge Leitung miteinander verbunden sind.
Die Erfindung hat sich die Aufgabe gestellt, ein Verfahren und eine analoge Endeinrichtung zur Verfügung zu stellen, die es ermöglichen, daß an eine zentrale Einrichtung, beispielsweise eine TK-Anlage, herstellerunabhängige analoge Endeinrichtungen anschaltbar sind, die miteinander Daten austauschen können. Dazu sind folgende Schritte erforderlich:
schnittstellenunabhängiges Implementieren der zentralen Einrichtung (100; 150), so daß sie mit verschiedenen, herstellerunabhängigen, analogen Endeinrichtungen 10 Daten austauschen kann,
Anschalten der analogen Endeinrichtung 10 über ein Modem 40 an die analoge Leitung 120.

## Description

Die Erfindung betrifft ein Verfahren zum bidirektionalen Austauschen von Anwendungs-, Steuer- und Informationsdaten zwischen wenigstens einer zentralen Einrichtung und wenigstens einer bei einem Teilnehmer installierten analogen Endeinrichtung nach Anspruch 1 sowie eine analoge Endeinrichtung nach Anspruch 7, die über eine analoge Leitung an eine zentrale Einrichtung anschaltbar ist und mit dieser Anwendungs-, Steuer- und Informationsdaten austauschen kann.

In modernen digitalen Kommunikations-Anlagen werden zwischen einer TK-Anlage oder einem Netzknoten und einem bei einem Kunden angeschalteten Endgerät neben den Informationen über die Konfiguration des jeweiligen Teilnehmeranschlusses auch Zustandsdaten über die zwischen der TK-Anlage und dem Endgerät bestehende Verbindung ausgetauscht. In Abhängigkeit von der Leistungsfähigkeit des Telefons stehen diese Informationen an einer mehr oder weniger komfortablen Benutzerführung zur Verfügung. Bei den bekannten Anlagen werden digitale Übertragungsverfahren eingesetzt, um Sprach- und Steuerinformationen gemeinsam über eine digitale Schnittstelle zu übertragen. Die in diesen Anlagen benutzten Telefone müssen speziell auf die Hersteller-spezifischen Übertragungsverfahren und auf die Übertragungs-Protokolle abgestimmt sein.

Um den Komfort an einem analogen Teilnehmeranschluß zu erhöhen, werden zusätzliche Informationen mit einem standardisierten Verfahren über analoge Leitungen übertragen. Aufgrund von standardisierten, systemspezifischen Übertragungsverfahren und -Protokollen ist es nicht möglich, herstellerunabhängige analoge Endeinrichtungen an zentrale Einrichtungen, wie z.B. an eine Vermittlungsstelle, eine Telekommunikationsanlage oder eine zentrale Steuereinrichtung (DV-Anlage, Host) anzuschalten.

Der Erfindung liegt daher die Aufgabe zugrunde, den Komfort an einem analogen Teilnehmeranschluß weiter zu erhöhen und die Flexibilität analoger, zentraler Einrichtungen, wie z. B. analoger Kommunikations-Anlagen, zu steigern.

Das technische Problem löst die Erfindung mit den Verfahrensschritten des Anspruchs 1 sowie den Merkmalen des Anspruchs 7. Vorteilhafte Weiterbildungen sind in den abhängigen Ansprüchen definiert.

Die Erfindung lehrt, die zentrale Einrichtung, beispielsweise eine TK-Anlage, eine Vermittlungsstelle oder eine DV-Anlage mit einem quasi schnittstellenunabhängigen Protokoll zu implementieren, so daß sie mit verschiedenen, herstellerunabhängigen, analogen Endeinrichtungen Daten austauschen kann. Vorteilhafterweise werden analoge Standard-Komforttelefone und herkömmliche zentrale Einrichtungen eingesetzt. Auf diese Weise kann eine anlagenspezifische Anpassung der Geräte vermieden werden.

Die analoge, beim Benutzer installierte Endeinrichtung benötigt lediglich eine Steuereinheit zum Verarbeiten der Anwendungs-, Steuer- und Informationsdaten, ein Display zum Darstellen der Steuer- und Informationsdaten, ein Eingabefeld, über das u.a. die Programmierung der zentralen Einrichtung erfolgen kann, ein Modem oder eine DTMF-Einrichtung, über die die analoge Endeinrichtung an eine analoge Leitung anschaltbar ist und über welche der bidirektionale Datenaustausch mit der zentralen Einrichtung erfolgt. Darüber hinaus weist die analoge Endeinrichtung einen Speicher auf, in den die zum bidirektionalen Datenaustausch notwendige Steuersoftware beispielsweise von der zugeordneten zentralen Einrichtung ladbar ist. Anstatt die Steuersoftware und Übertragungsprotokolle von der zentralen Einrichtung in den Speicher der Endeinrichtung zu laden, kann die analoge Endeinrichtung zur Aufnahme und zum Lesen einer Chipkarte ausgebildet sein, die die entsprechenden Protokolle und entsprechende Steuersoftware speichert und in die Kommunikation zwischen der zentralen Einrichtung und der analogen Endeinrichtung einbinden kann. Eine programmierbare Steuereinheit übernimmt in der analogen Endeinrichtung die Überwachung und Steuerung des Datenaustausches zwischen der analogen Endeinrichtung und der zentralen Einrichtung.
Die analoge Einrichtung ist vorteilhafterweise derart ausgebildet, daß ein Benutzer eine grafische und/oder alphanumerische Bedienoberfläche von der zugeordneten zentralen Einrichtung oder auch von einer Chipkarte in den Speicher laden kann. Der Benutzer verfügt damit an seiner analogen Endeinrichtung über all die von der zentralen Einrichtung zur Verfügung gestellten Leistungsmerkmale. Insbesondere kann der Benutzer während einer bestehenden Verbindung die Informationen über den Verbindungszustand, über die aktuelle Konfiguration der zentralen Einrichtung oder die jeweilige Anwendung empfangen und ansehen. Darüber hinaus wird der Benutzer in die Lage versetzt, die Leistungsmerkmale der zentralen Einrichtung interaktiv zu steuern oder Anwendungsdaten auszutauschen. Dank der Erfindung ist es auch möglich, die zentrale Einrichtung von der analogen Endeinrichtung aus benutzergesteuert zu konfigurieren. Beispielsweise kann ein Benutzer an seiner analogen Endeinrichtung das Leistungsmerkmal "Rufweiterleitung" in der zentralen Einrichtung aktivieren.

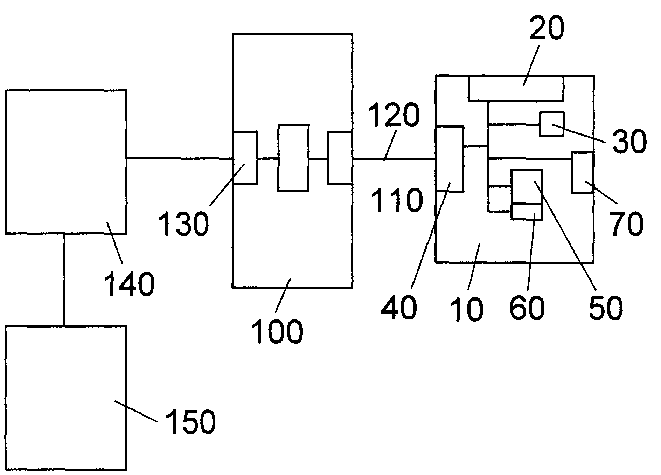

Die Erfindung wird nachfolgend anhand eines Ausführungsbeispiels in Verbindung mit der beiliegenden Figur näher beschrieben.

In der Figur ist als analoge Endeinrichtung ein Fernsprechapparat 10 dargestellt, der aus an sich bekannten Komponenten aufgebaut ist. Dies sind beispielsweise eine alphanumerische Anzeige-Einrichtung 20, ein Eingabefeld 30, ein Modem, wie z. B. ein FSK-Modem, oder eine DTMF-Einrichtung zum Anschalten des Fernsprechapparates 10 an die a/b-Adern 120 einer analogen Leitung. Darüber hinaus weist der Fernsprechapparat 10 eine Steuereinrichtung 50 und einen Speicher 60 auf, in den beispielsweise die anwendungsspezifische Software und die Schnittstellenunabhängigen Übertragungs-Protokolle von einer zugeordneten Telekommunikations-Einrichtung 100 oder einer zentralen Steuereinrichtung 150 ladbar sind. Ein Chipkartenleser 70 kann vorgesehen sein, um die in einer eingesetzten Chipkarte gespeicherte Steuersoftware und gespeicherten Schnittstellen-unabhängigen Übertragungsprotokolle auszulesen oder entsprechende Kommunikations-Anwendungen zu unterstützen. Der Fernsprechapparat 10 ist über die a/b-Adern 120 an die TK-Anlage 100 angeschlossen. Die TK-Anlage 100 weist an sich bekannte Komponenten auf. Dazu zählen eine analoge Schnittstelle in Form eines Modems, über das die TK-Anlage 100 an die a/b-Adern 120 anschaltbar ist. Die TK-Anlage 100 kann zusätzlich eine analoge oder digitale Schnittstelle aufweisen, über die sie mit einer Vermittlungsstelle 140 verbunden sein kann.
Vorteilhafterweise kann in die TK-Anlage 100 mit dem Leistungsmerkmal "Fernverwalten" eine Software eingespielt werden. Dazu benötigt die TK-Anlage 100 lediglich noch ein FLASH-EPROM.

Der Fernsprechapparat 10 kann zusätzlich eine nicht dargestellte Anzeigeeinrichtung enthalten, auf der eine grafische Bedienoberfläche darstellbar ist. Obwohl das vorliegende Ausführungsbeispiel einen Fernsprechapparat 10 zeigt, der an einer TK-Anlage 100 angeschaltet ist, ist es denkbar, den Fernsprechapparat 10 auch unmittelbar an die Vermittlungseinrichtung 140 anzuschalten. Dies ist insbesondere dann sinnvoll, wenn lediglich die Leistungsmerkmale Fernbedienung, Fernwirken, Fernbetreuung, Fernwartung und Fernverwaltung zur Anwendung kommen. Erfindungsgemäß sorgt ein Schnittstellen-unabhängiges Protokoll dafür, daß ein Benutzer an seinem Fernsprechapparat 10 beispielsweise über das Eingabefeld 30 eine grafische, alphanumerische Bedienoberfläche von der zugeordneten TK-Anlage 100 in den Speicher 60 seines Fernsprechapparates 10 laden kann. Das zwischen der TK-Anlage 100 und dem Fernsprechapparat 10 vereinbarte Übertragungsprotokoll gestattet es ferner, daß ein Benutzer direkt über das Eingabefeld 30 die TK-Anlage 100 konfigurieren kann. Der Benutzer kann beispielsweise das Leistungsmerkmal "Rufweiterleitung" oder "Dreierkonferenz" in der TK-Anlage 100 aktivieren. Eine weitere Möglichkeit besteht sogar darin, sowohl die TK-Anlage 100 als auch den analogen Fernsprechapparat 10 von der zentralen Steuereinrichtung 150 aus zu konfigurieren oder Anwendungs- und Steuerdaten zwischen dem analogen Fernsprechapparat 10 und der zentralen Steuereinrichtung 150 auszutauschen. Die erfindungsgemäße Anlage kann so ausgebildet sein, daß die Anwendungs-, Steuer- und/oder Informationsdaten über die a/b-Adern 120 der analogen Leitung oder alternativ über die E- und W-Adern übertragen werden können. Dies erhöht ebenfalls den Leistungskomfort, da gleichzeitig über die a/b-Adern 120 Nutzdaten übertragen werden können.

## Patentansprüche

1. Verfahren zum bidirektionalen Austauschen von Anwendungs-, Steuer- und Informationsdaten zwischen wenigstens einer zentralen Einrichtung (100; 150) und wenigstens einer bei einem Teilnehmer installierten analogen Endeinrichtung (10), die über eine analoge Leitung (120) miteinander verbunden sind, mit folgenden Schritten:
schnittstellenunabhängiges Implementieren der zentralen Einrichtung (100; 150), so daß sie mit verschiedenen, herstellerunabhängigen, analogen Endeinrichtungen (10) Daten austauschen kann,
Anschalten der analogen Endeinrichtung (10) über ein Modem (40) an die analoge Leitung (120).

2. Verfahren zum bidirektionalen Austauschen von Anwendungs-, Steuer- und Informationsdaten nach Anspruch 1,
gekennzeichnet durch benutzergesteuertes Laden einer graphischen und/oder alphanumerischen Bedienoberfläche und/oder von Steuerdaten, Konfigurations- oder Anwendungsdaten von der zugeordneten zentralen Einrichtung (100; 150) in die analoge Endeinrichtung (10) und Führung des Benutzers an der analogen Endeinrichtung (10) mit Hilfe der geladenen graphischen und/oder alphanumerischen Bedienoberfläche für die jeweilige Anwendung.

3. Verfahren zum bidirektionalen Austauschen von Anwendungs-, Steuer- und Informationsdaten nach Anspruch 1 oder 2,
gekennzeichnet durch
benutzergesteuertes Konfigurieren der zugeordneten zentralen Einrichtung (100) von der analogen Endeinrichtung (10).

4. Verfahren zum bidirektionalen Austauschen von Anwendungs-, Steuer- und Informationsdaten nach einem der Ansprüche 1 bis 3,
gekennzeichnet durch
Anfragen und Anzeigen von Verbindungs- und Konfigurationsinformationen an der analogen Endeinrichtung (10).

5. Verfahren zum bidirektionalen Austauschen von Anwendungs-, Steuer- und Informationsdaten nach einem der Ansprüche 1 bis 4,
gekennzeichnet durch
Fernkonfigurieren der zentralen Einrichtung (100) und/oder der analogen Endeinrichtung (10) von einer zentralen Steuereinrichtung (150) aus.

6. Verfahren zum bidirektionalen Austauschen von Anwendungs-, Steuer- und Informationsdaten nach einem der Ansprüche 1 bis 5,
gekennzeichnet durch
Erkennen und Anzeigen der Rufnummer eines rufenden Teilnehmers an der analogen Endeinrichtung (10) sowie Anzeigen des der Rufnummer zugeordneten Namens.

7. Analoge Endeinrichtung, die über eine analoge Leitung, insbesondere über a/b-Adern (120) an eine zentrale Einrichtung (100; 150) anschaltbar ist und mit dieser bidirektional Anwendungs-, Steuer- und Informationsdaten austauschen kann, mit folgenden Merkmalen:
eine Anzeige (20) zum Darstellen der Anwendungs-, Steuer- und Informationsdaten,
ein Eingabefeld (30),
ein Modem (40) oder eine DTMF-Eirichtung, über die die Endeinrichtung (10) an die analoge Leitung (120) anschaltbar ist und über welche der bidirektionale Datenaustausch mit der zentralen Einrichtung (100; 150) erfolgt,
ein Speicher (60), in dem die zum bidirektionalen Datenaustausch notwendige Software von der zugeordneten zentralen Einrichtung (100, 150) ladbar ist, und
eine Steuereinheit (30), die den Datenaustausch zwischen der Endeinrichtung (10) und der zentralen Einrichtung (100; 150) steuern kann.

8. Analoge Endeinrichtung nach Anspruch 7,
gekennzeichnet durch einen Chipkartenleser (70).

9. Analoge Endeinrichtung nach Anspruch 7 oder 8,
gekennzeichnet durch eine Schalteinrichtung, die das Modem (40) oder die DTMF-Einrichtung an die a/b-Adern (120) bzw. an die E-W-Adern anschalten kann.
